# EUROPÄISCHE PATENTSCHRIFT

(11) **EP 2 071 293 B1**
(45) Veröffentlichungstag und Bekanntmachung des Hinweises auf die Patenterteilung: **12.03.2014**
(21) Anmeldenummer: 08169943.1
(22) Anmeldetag: 26.11.2008
(51) Int. Cl.: G01D 5/165

(54) **Positionssensor**
Position sensor
Capteur de position

(30) Priorität: 11.12.2007 DE 102007059988
(43) Veröffentlichungstag der Anmeldung: 17.06.2009
(73) Patentinhaber: Metallux AG, 71404 Korb (DE)
(72) Erfinder: Herlinger, Peter, 73733 Esslingen (DE)
(74) Vertreter: BRP Renaud & Partner

(56) Entgegenhaltungen:
- EP-A2- 0 284 787
- DE-A1- 4 335 004
- DE-U1- 20 013 047

## Beschreibung

Die vorliegende Erfindung betrifft einen Positionssensor, insbesondere ein Potentiometer, mit den Merkmalen des Oberbegriffs des Anspruchs 1.

Aus der DE 43 35 004 A1 ist ein als Potentiometer ausgestalteter Positionssensor in Folienbauweise bekannt. Dieser umfasst einen ersten Träger, der in einem Schaltungsbereich zumindest eine Elektrode einer elektrischen bzw. elektronischen Sensorschaltung aufweist, sowie einen zweiten Träger, der dem ersten Träger gegenüberliegend angeordnet ist und der zumindest eine andere Elektrode der Sensorschaltung aufweist. Beim bekannten Positionssensor sind beide Träger als elastisch biegeverformbare flexible Folie ausgestaltet. Außerdem umfasst ein derartiger Positionssensor einen Abstandshalterrahmen, über den die beiden Träger aneinander befestigt sind, der den Schaltungsbereich seitlich einfasst und der die Träger bezüglich einer Betätigungsrichtung voneinander beabstandet, und zwar so, dass die Elektroden der Sensorschaltung durch Drücken und Durchbiegen zumindest eines der Träger miteinander kontaktierbar sind.

Es hat sich gezeigt, dass es bei derartigen Sensoren zu einer erhöhten Ausfallwahrscheinlichkeit kommen kann, wenn sie in einer Umgebung mit erhöhter Temperatur zum Einsatz kommen.

Die vorliegende Erfindung beschäftigt sich mit dem Problem, für einen Positionssensor der eingangs genannten Art eine verbesserte Ausführungsform anzugeben, die sich insbesondere dadurch charakterisiert, dass sie auch bei erhöhter Umgebungstemperatur eine relativ hohe Funktionssicherheit aufweist.

Dieses Problem wird erfindungsgemäß durch den Gegenstand des unabhängigen Anspruchs gelöst. Vorteilhafte Ausführungsformen sind Gegenstand der abhängigen Ansprüche.

Die Erfindung beruht auf dem allgemeinen Gedanken, in dem vom Abstandshalterrahmen einfassten Schaltungsbereich zumindest einen zusätzlichen Abstandshalter in Form eines Distanzelementes vorzusehen, an dem sich die Träger zumindest bei der Betätigung des Sensors aneinander abstützen können. Dabei ist das wenigstens eine Distanzelement hinsichtlich Positionierung und/oder Dimensionierung so gewählt, dass die Betätigbarkeit des Sensors, also das Kontaktieren seiner Elektroden durch Durchbiegen wenigstens eines Trägers nach wie vor möglich ist. Durch das Vorsehen wenigstens eines solchen Distanzelements erhält der als Folie ausgestaltete zweite Träger zumindest bei seiner Betätigung eine Unterstützung im Schaltungsbereich. Dies führt bei der Betätigung des Sensors im zweiten Träger zu einer erhöhten Spannung, da der zweite Träger aufgrund des wenigstens einen Distanzelementes stärker durchgebogen werden muss, damit sich die Elektroden kontaktieren können. Diese stärke Durchbiegung führt zu stärkeren Rückstellkräften innerhalb des zweiten Trägers, wodurch die Wahrscheinlichkeit, dass die Elektroden nach Beendigung der Betätigung des Sensors innerhalb der jeweiligen Berührungsstelle aneinander in Kontakt bleiben, reduziert ist. Die Erfindung benutzt hierbei die Erkenntnis, dass das Folienmaterial des zweiten Trägers bei erhöhter Betriebstemperatur im Falle einer Biegeverformung nur noch reduzierte Rückstellkräfte erzeugen kann, so dass es grundsätzlich möglich ist, dass die Elektrode des zweiten Trägers, insbesondere nach einer längeren Betätigung an der gleichen Kontaktstelle an der wenigstens einen Elektrode des ersten Trägers zumindest für eine unzulässig lange Zeit liegen bleibt, bevor sie sich aufgrund ihrer Elastizität wieder zurückstellt. Auf diese Weise kann ein herkömmlicher Sensor bei erhöhten Umgebungstemperaturen zumindest vorübergehend ausfallen. Da mit Hilfe der erfindungsgemäß vorgeschlagenen Distanzelemente die Rückstellkräfte innerhalb des zweiten Trägers erhöht sind, kann sich dieser deutlich besser vom ersten Träger entfernen, wenn die Betätigung beendet ist. Somit kann beim erfindungsgemäßen Positionssensor die Funktionssicherheit auch bei erhöhten Umgebungstemperaturen gesteigert werden.

Je nach Dimensionierung des wenigstens einen Distanzelements können die beiden Träger immer oder zumindest bei der Betätigung des Positionssensors über das wenigstens eine Distanzelement lose aneinander anliegen. Das heißt, dass die beiden Träger über das wenigstens eine Distanzelement nicht aneinander befestigt sind, sondern über das wenigstens eine Distanzelement lediglich aneinander abgestützt sind. Dies ermöglicht insbesondere Relativbewegungen zwischen dem jeweiligen Träger und dem jeweiligen Distanzelement.

Die Distanzelemente lassen sich auf unterschiedliche Weise realisieren. Beispielsweise lässt sich ein derartiges Distanzelement durch eine Polymerpaste bilden, die auf den jeweiligen Träger mit einem Druckverfahren, insbesondere mit einem Siebdruckverfahren, aufgedruckt und ausgehärtet ist. Ein derartiges Druckverfahren ist insbesondere dann von Vorteil, wenn am jeweiligen Träger die jeweilige Elektrode durch eine elektrisch leitendende Polymerpaste gebildet ist und ebenfalls im Druckverfahren, insbesondere mittels Siebdruck, auf den jeweiligen Träger aufgedruckt wird.

Alternativ kann das jeweilige Distanzelement auch durch ein Folienmaterial gebildet sein, dass auf den jeweiligen Träger aufgeklebt ist. Bei der Herstellung des Sensors wird ohnehin Folienmaterial zur Herstellung wenigstens des zweiten Trägers verwendet, so dass derartiges Folienmaterial zur Verfügung steht. Des weiteren lassen sich die Temperaturausdehnungskoeffzienten des Distanzelementes und des jeweiligen Trägers durch die Verwendung gleicher Folienmaterialien identisch wählen, was die Temperaturfestigkeit des Positionssensors erhöht.

Des weiteren ist es grundsätzlich möglich, das jeweilige Distanzelement durch eine Prägung am jeweiligen Träger auszubilden. Der jeweilige Träger besteht dann auch beispielsweise aus einem duroplastischen Kunststoff.

Das wenigstens eine Distanzelement kann aus einem elektrisch isolierenden Material bestehen, wodurch Wechselwirkungen mit der Sensorschaltung ausgeschlossen werden können.

Alternativ ist eine Ausführungsform denkbar, bei welcher das jeweilige Distanzelement aus einem elektrisch leitenden Material besteht, wobei es dann gleichzeitig einen Bestandteil der Sensorschaltung bilden kann, wie z.B. eine Leiterbahn zur Kontaktierung einer der Elektroden des jeweiligen Trägers und/oder einen Schutzwiderstand der Sensorschaltung.

Weitere wichtige Merkmale und Vorteile der Erfindung ergeben sich aus den Unteransprüchen, aus den Zeichnungen und aus der zugehörigen Figurenbeschreibung anhand der Zeichnungen.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Bevorzugte Ausführungsbeispiele der Erfindung sind in den Zeichnungen dargestellt und werden in der nachfolgenden Beschreibung näher erläutert, wobei sich gleiche Bezugszeichen auf gleiche oder ähnliche oder funktional gleiche Bauteile beziehen.

Es zeigen, jeweils schematisch,
- Fig. 1: einen Querschnitt durch einen Positionssensor im Bereich einer Betätigungsstelle,
- Fig. 2: einen Querschnitt wie in Fig. 1, jedoch in einem unbetätigten Bereich,
- Fig. 3: eine geschnittene Draufsicht auf den Positionssensor,
- Fig. 4: eine Draufsicht wie in Fig. 3, jedoch bei einer anderen Ausführungsform.

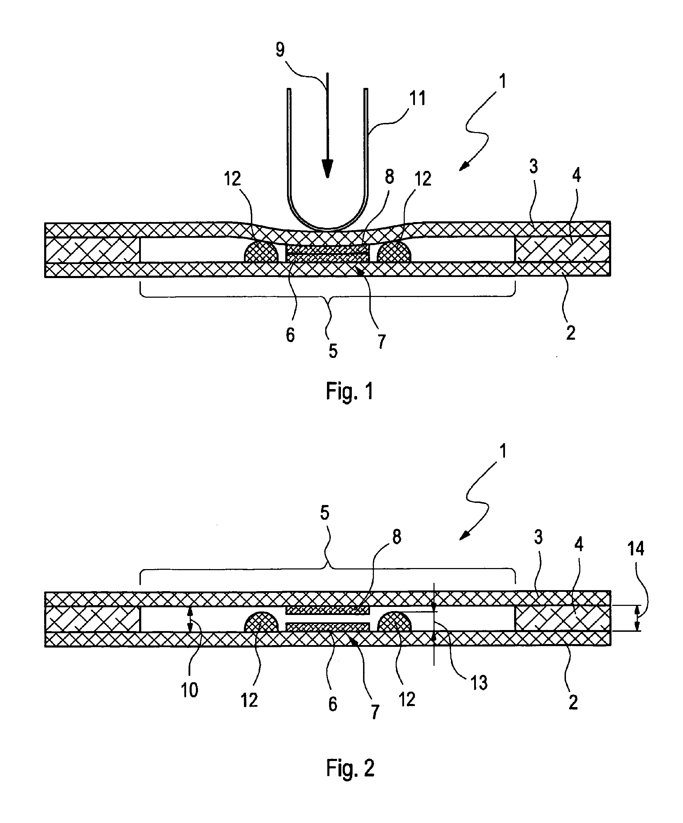

Entsprechend den Figuren 1 und 2 weist ein erfindungsgemäßer Positionssensor 1 zwei Träger auf, nämlich einen ersten Träger 2 und einen zweiten Träger 3. Des weiteren ist ein Abstandshalterrahmen 4 vorgesehen, der die beiden Träger 2, 3 aneinander befestigt. Zumindest der zweite Träger 3 ist als elastisch biegeverformbare flexible Folie ausgestaltet. Im Unterschied dazu kann der erste Träger 2 grundsätzlich aus einem deutlich steiferen Material hergestellt sein. Bevorzugt ist jedoch eine Ausführungsform, bei welcher auch der erste Träger 2 als elastisch biegeverformbare flexible Folie ausgestaltet ist. Bevorzugt wird dabei das gleiche Folienmaterial wie beim zweiten Träger 3 verwendet. Auch der Abstandshalterrahmen 4 kann aus einem entsprechenden Folienmaterial hergestellt sein. Die beiden Träger 2, 3 sind zweckmäßig mit dem Abstandshalterrahmen 4 verklebt.

Der erste Träger 2 weist in einem Schaltungsbereich 5, der hier durch eine geschweifte Klammer symbolisiert ist, zumindest eine Elektrode 6 einer elektrischen bzw. elektronischen Sensorschaltung 7 auf. Bei dieser Sensorschaltung 7 kann es sich insbesondere um eine Potentiometerschaltung handeln. Alternativ ist grundsätzlich auch eine einfache Kontaktschaltung zur Realisierung eines Schalters denkbar.

Der zweite Träger 3 weist ebenfalls wenigstens eine Elektrode 8 dieser Sensorschaltung 7 auf. Die beiden Träger 2, 3 sind mit Hilfe des Abstandshalterrahmens 4 relativ so zueinander positioniert, dass sie einander gegenüberliegen und sich im wesentlichen parallel zueinander erstrecken. Im unverformten Zustand erstrecken sich die Träger 2, 3 bevorzugt jeweils in einer Ebene, wobei die beiden Träger 2, 3 relativ zueinander so ausgerichtet sind, dass sich ihre Ebenen parallel zueinander erstrecken.

Der Abstandshalterrahmen 4 fasst den Schaltungsbereich 5 seitlich ein und ist hinsichtlich seiner Dickenrichtung, die sich parallel zu einer in Fig. 1 durch einen Pfeil angedeuteten Betätigungsrichtung 9 erstreckt, so dimensioniert, dass die beiden Träger 2, 3 im unbetätigten Zustand gemäß Fig. 2 in dieser Betätigungsrichtung 9 einen definierten Abstand 10 voneinander aufweisen. Besagter Abstand 10 ist dabei so gewählt, dass sich die Elektroden 6, 8 der beiden Träger 2, 3 im unbetätigten Zustand nicht berühren können. Besagter Abstand 10 ist somit größer als die Dicke der beiden Elektroden 6, 8. Der Abstand 10 zwischen den Träger 2, 3 ist ferner so gewählt, dass die Elektroden 6, 8 durch Drücken des zweiten Trägers 3 gegen den ersten Träger 2 eine Kontaktierung der sich gegenüberliegenden Elektroden 6, 8 realisierbar ist. Gemäß Fig. 1 biegt sich der zweiten Träger 3 im Falle der Betätigung des Sensors 1 soweit durch, dass seine wenigstens eine Elektrode 8 die wenigstens eine Elektrode 6 des ersten Trägers 2 berührt. Die Krafteinleitung zur Betätigung des Sensors 1 wird hier mit Hilfe eines Betätigungsglieds 11 realisiert, das hierzu den zweiten Träger 3 von außen berührt. Grundsätzlich sind auch Ausführungsformen mit einer berührungslosen Betätigung denkbar, beispielsweise mittels magnetischer Kräfte.

Erfindungsgemäß ist zumindest einer der Träger 2, 3 mit wenigstens einem Distanzelement 12 ausgestattet, das im Schaltungsbereich 5, also innerhalb des Abstandshalterrahmens 4 angeordnet ist. Des weiteren befindet sich das jeweilige Distanzelement 12 seitlich neben der wenigstens einen Elektrode 6 bzw. 8 des jeweiligen Trägers 2, 3. Gemäß Fig. 1 können sich die beiden Träger 2, 3 zumindest bei der Betätigung des Positionssensors 1 über das wenigstens eine Distanzelement 12 aneinander abstützen, wenn der zweite Träger 3 entsprechend betätigt wird. Hierdurch muss der zweite Träger 3 stärker deformiert werden, um die gewünschte Kontaktierung der Elektroden 6, 8 herbeizuführen. In der Folge werden im zweiten Träger 3 größere Spannungen aufgebaut, die aufgrund der Elastizität der Biegeverformung erhöhte Rückstellkräfte zur Folge haben. Diese erhöhten Rückstellkräfte bewirken bei einer Beendigung der Betätigung im jeweiligen Abschnitt des Positionssensors 1 ein automatisches Rückstellen des zweiten Trägers 3 in seine ursprüngliche Form. Je größer diese Rückstellkräfte sind, desto besser kann sich der zweite Träger 3 in seine ursprüngliche Ausgangsform zurückstellen. Da das jeweilige Distanzelement 12 somit die Rückstellung des zweiten Trägers 3 begünstigt, erhöht sich die Funktionssicherheit des Positionssensors 1 auch bei erhöhten Betriebstemperaturen.

Im gezeigten Beispiel der Fig. 1 bis 3 sind insgesamt zwei Distanzelemente 12 vorgesehen, die beiderseits der Elektrode 6 des ersten Trägers 2 am ersten Träger 2 angeordnet sind.

Entsprechend den Fig. 1 und 2 besitzt das jeweilige Distanzelement 12 in der Betätigungsrichtung 9 eine Dicke 13, die größer ist als die Dicke der sich beim Betätigen des Positionssensors 1 kontaktierenden Elektroden 6, 8 zusammen. Insbesondere ist die Dicke 13 des jeweiligen Distanzelements 12 gleich groß wie der Abstand 10 zwischen den Trägern 2, 3, der durch die Dicke 14 des Abstandshalterrahmens 4 definiert ist. Dementsprechend sind die Distanzelemente 12 dann gleich dick wie der Abstandshalterrahmen 4. Bei einer anderen Ausführungsform kann die Dicke 13 der Distanzelemente 12 auch größer gewählt sein als die Dicke 14 des Abstandshalterrahmens 4. In der Folge ergibt sich dann eine nach außen geformte Wölbung oberhalb der jeweiligen Elektrode 6, die gleichzeitig den Abstand 10 zwischen den Trägern 2, 3 im Bereich der Elektroden 6, 8 vergrößert. Im gezeigten Beispiel ist die Dicke 13 der Distanzelemente 12 kleiner gewählt als der Abstand 10 bzw. kleiner als die Dicke 14 des Abstandshalterrahmens 4. Entscheidend ist, dass sich beim Betätigen des Sensors 1 die beiden Träger 2, 3 über das jeweilige Distanzelement 12 abstützen, bevor sich die Elektroden 6, 8 kontaktieren.

Die Distanzelemente 12 sind so ausgestaltet, dass sich die beiden Träger 2, 3 über das jeweilige Distanzelement 12 lose aneinander abstützen können, das heißt, über die Distanzelemente 12 sind die Träger 2, 3 nicht aneinander befestigt.

Im gezeigten Beispiel sind die beiden Distanzelemente 12 ausschließlich am ersten Träger 2 angebracht. Ebenso ist es möglich, die Distanzelemente 12 ausschließlich am zweiten Träger 3 anzubringen. Ebenso ist eine Ausführungsform denkbar, bei der sowohl am ersten Träger 2 als auch am zweiten Träger 3 jeweils wenigstens ein solches Distanzelement 12 angeordnet ist. Dabei ist es auch möglich, die Distanzelemente 12 so zu positionieren, dass sich zumindest bei der Betätigung des Sensors 1 ein Distanzelement 12 des einen Trägers 2 an einem Distanzelement 12 des anderen Trägers 3 abstützt.

Wie erläutert, handelt es sich beim Sensor 1 bevorzugt um einen Foliensensor, also um einen Sensor 1 in Folienbauweise, bei dem die beiden Träger 2, 3 und der Abstandshalterrahmen 3 als Folien ausgestaltet sind. Eine Folie charakterisiert sich durch eine vergleichsweise geringe Dicke im Vergleich zu ihrer Länge und Breite. Beispielsweise besitzen die Folien eine Dicke von maximal 0,2 mm.

Für die Herstellung der Sensorschaltung 7 kann es vorgesehen sein, die gesamte Sensorschaltung 7 oder zumindest Bestandteile derselben mit einem Druckverfahren zu realisieren, bei dem eine elektrisch leitende Polymerpaste auf den jeweiligen Träger 2, 3 aufgedruckt wird. Hierbei können beispielsweise Siedruckverfahren zur Anwendung kommen.

Besonders vorteilhaft ist eine Ausführungsform, bei welcher das jeweilige Distanzelement 12 durch eine Polymerpaste gebildet ist. Diese kann zweckmäßig mit einem geeigneten Druckverfahren auf den jeweiligen Träger 2, 3 aufgedruckt werden und ausgehärtet werden. Insbesondere eignet sich hierfür auch ein Siebdruckverfahren. Als Polymerpaste zur Herstellung der Distanzelemente 12 eignet sich beispielsweise ein Klebstoff, der z.B. mittels UV-Bestrahlung aushärtbar ist.

Alternativ können die Distanzelemente 12 auch durch Folienmaterial gebildet sein, das dann auf geeignete Weise auf den jeweiligen Träger 2, 3 aufgeklebt ist.

Alternativ ist auch eine Ausführungsform denkbar, bei welcher der jeweilige Träger 2, 3 eine Prägung aufweist, die dann das jeweilige Distanzelement 12 bildet. Beispielsweise kann hierzu der jeweilige Träger 2, 3 aus einer thermoplastischen Folie gebildet sein. Beispielsweise besteht der jeweilige Träger 2, 3 dann aus PEEK. Ebenso ist es grundsätzlich möglich, andere Folienwerkstoffe, wie z.B. Polyester, Kapton oder FR4 zum Herstellen des jeweiligen Folienträgers 2, 3 zu verwenden.

Die in den Fig. 1 und 2 erkennbaren Distanzelemente 12 sind identisch gestaltet und besitzen insbesondere gleiche Dicken 13. Bei einer anderen Ausführungsform kann grundsätzlich vorgesehen sein, zumindest zwei Distanzelemente 12 mit unterschiedlichen Dicken 13 zu versehen.

Die Distanzelemente 12 sind bei der hier gezeigten Ausführungsform im Schaltungsbereich 5 so angeordnet, dass zwischen der Sensorschaltung 7 und dem Abstandshalterrahmen 4 jeweils nur ein Distanzelement 12 angeordnet ist, also in der sich von der Sensorschaltung 7 zum Abstandshalterrahmen 4 orientierten Richtung. Bei einer anderen Ausführungsform kann es vorgesehen sein, in dieser Richtung, also zwischen der Sensorschaltung 7 und dem Abstandshalterrahmen 4 zumindest zwei Distanzelemente 12 seitlich nebeneinander anzuordnen. Hierdurch ist es, insbesondere in Verbindung mit einer gestuften Dicke 13 der Distanzelemente 12, möglich, das Rückstellverhalten des zweiten Trägers 3 gezielt zu beeinflussen.

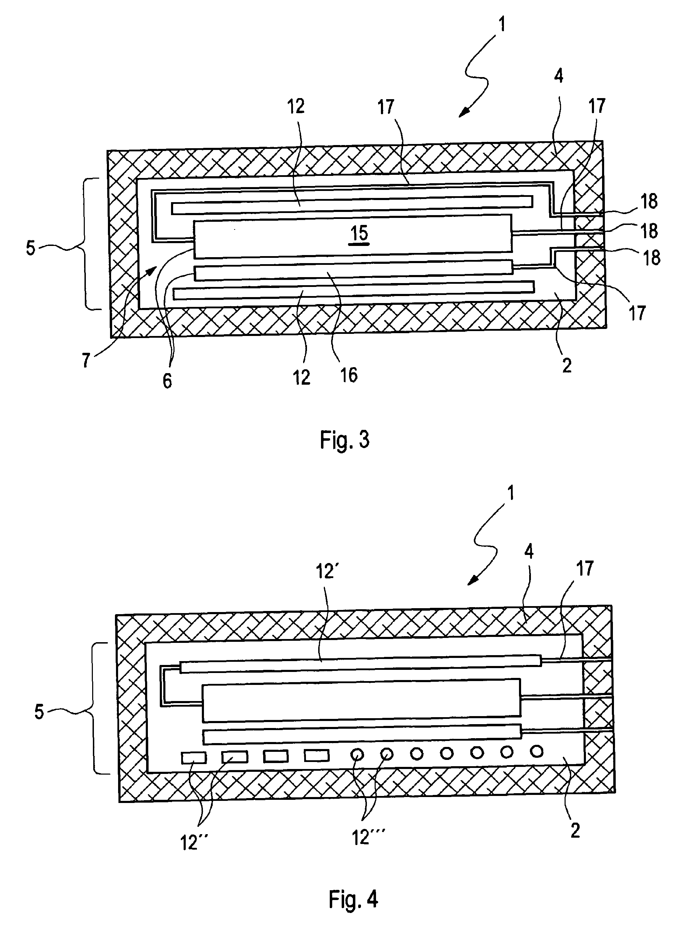

Bezugnehmend auf die Fig. 3 und 4 kann die Sensorschaltung 7 beispielsweise als Potentiometerschaltung ausgestaltet sein. Dementsprechend umfasst die Sensorschaltung 7 z.B. am ersten Träger 2 eine Widerstandsstrecke 15 und eine Kollektorstrecke 16, die beide Elektroden 6 des ersten Trägers 2 bilden. Die Elektrode 8 des zweiten Trägers 3, die in den Darstellungen der Fig. 3 und 4 nicht erkennbar ist, bildet dann eine Konnektorstrecke und ist so positioniert, dass sie beim Betätigen des Sensors 1 an der Position der jeweiligen Betätigung die Widerstandsstrecke 15 lokal mit der Kollektorstrecke 16 verbindet.

Die Widerstandsstrecke 15 und die Kollektorstrecke 16 sind über entsprechende Leiterbahnen 17 mit Anschlüssen 18 verbunden, über die eine Auswerteschaltung an den Sensor 1 anschließbar ist. Die beiden Distanzelemente 12 erstrecken sich bei der in Fig. 3 gezeigten Ausführungsform jeweils über die gesamte Länge der Widerstandsstrecke 15 und der Kollektorstrecke 16, wodurch über die gesamte Länge des Messbereichs des Sensors 1 die erhöhte Rückstellkraft im zweiten Träger 3 realisierbar ist.

Bei der in Fig. 3 gezeigten Ausführungsform bestehen die Distanzelemente 12 vorzugsweise aus einem elektrisch isolierenden Material, wodurch eine Wechselwirkung mit Schaltungskomponenten 6, 8, 15, 16, 17 ausgeschlossen werden kann. Im Unterschied dazu zeigt Fig. 4 eine Ausführungsform, bei welcher zumindest eines der Distanzelemente 12, hier das oben dargestellte Distanzelement 12' aus einem elektrisch leitenden Material besteht und hier außerdem einen Bestandteil der Sensorschaltung 7 bildet. Im Beispiel ist dieses Distanzelement 12' in eine der Leiterbahnen 17 integriert und kann insbesondere einen Abschnitt dieser Leiterbahn 17 bilden. Gleichzeitig kann dieses Distanzelement 12' einen Schutzwiderstand realisieren, der in die Leiterbahn 17 eingebunden ist.

Fig. 4 zeigt in der unteren Hälfte weitere Varianten für das Distanzelement 12. So sind beispielsweise links rechteckige Distanzelemente 12" dargestellt, während rechts kreisförmige Distanzelemente 12"' dargestellt sind. Hierdurch wird veranschaulicht, dass nicht zwangsläufig ein sich unterbrechungsfrei entlang der Sensorschaltung 7 erstreckendes Distanzelement 12 vorgesehen sein muss. Vielmehr kann im Grund die gleiche Wirkung durch eine Vielzahl punktueller Distanzelemente 12" bzw. 12"' realisiert werden.

Im hier gezeigten Beispiel handelt es sich beim Positionssensor 1 somit bevorzugt um ein Potentiometer. Dabei ist rein exemplarisch ein lineares Potentiometer 1 dargestellt, also ein linearer Weggeber. Grundsätzlich sind auch Drehpotentiometer 1 in gleicher Weise realisierbar, also Drehwinkelgeber.

Wie den Fig. 3 und 4 entnehmbar ist, umschließt der Abstandshalterrahmen 4 den Schaltungsbereich 5 zweckmäßig allseitig, wodurch die Sensorschaltung 7 hermetisch eingeschlossen werden kann.

## Patentansprüche

1. Positionssensor, insbesondere Potentiometer,
- mit einem ersten Träger (2), der in einem Schaltungsbereich (5) zumindest eine Elektrode (6) einer elektrischen und/oder elektronischen Sensorschaltung (7) aufweist,
- mit einem zweiten Träger (3), der als elastisch biegeverformbare flexible Folie ausgestaltet ist, der dem ersten Träger (2) gegenüberliegend angeordnet ist und der zumindest eine andere Elektrode (8) der Sensorschaltung (7) aufweist,
- mit einem Abstandshalterrahmen (4), über den die beiden Träger (2, 3) aneinander befestigt sind, der den Schaltungsbereich (5) seitlich einfasst und der die Träger (2, 3) bezüglich einer Betätigungsrichtung (9) voneinander beabstandet, derart, dass die Elektroden (6, 8) der Sensorschaltung (7) durch Drücken und Durchbiegen des zweiten Trägers (3) gegen den ersten Träger (1) miteinander kontaktierbar sind,
**dadurch gekennzeichnet,**
**dass** zumindest an einem der Träger (2, 3) in dem vom Abstandshalterrahmen (4) eingefassten Schaltungsbereich (5) wenigstens ein Distanzelement (12) seitlich neben der wenigstens einen Elektrode (6, 8) angeordnet ist, an dem sich die Träger (2, 3) zumindest beim zur Betätigung des Positionssensors (1) dienenden Durchbiegen des zweiten Trägers (3) aneinander abstützen.

2. Positionssensor nach Anspruch 1,
**dadurch gekennzeichnet,**
**dass** das wenigstens eine Distanzelement (12) in der Betätigungsrichtung (9) eine Dicke (13) aufweist, die größer ist als die Dicke der sich beim Betätigen des Positionssensors (1) kontaktierenden Elektroden (6, 8), wobei insbesondere die Dicke (13) des jeweiligen Distanzelements (12) gleich groß wie die Dicke (14) des Abstandshalterrahmens (4) oder größer als die Dicke (14) des Abstandshalterrahmens (4) sein kann.

3. Positionssensor nach Anspruch 1 oder 2,
**dadurch gekennzeichnet,**
**dass** die beiden Träger (2, 3) immer oder zumindest bei der Betätigung des Positionssensors (1) über das wenigstens eine Distanzelement (12) lose aneinander anliegen.

4. Positionssensor nach einem der Ansprüche 1 bis 3,
**dadurch gekennzeichnet,**
**dass** das Distanzelement (12) oder zumindest ein solches Distanzelement (12) durch eine Polymerpaste gebildet ist, die auf den jeweiligen Träger (2, 3) mit einem Druckverfahren, insbesondere Siebdruck, aufgedruckt und ausgehärtet ist.

5. Positionssensor nach einem der Ansprüche 1 bis 4,
**dadurch gekennzeichnet,**
**dass** das Distanzelement (12) oder zumindest ein solches Distanzelement (12) durch Folienmaterial gebildet ist, das auf den jeweiligen Träger (2, 3) aufgeklebt ist.

6. Positionssensor nach einem der Ansprüche 1 bis 5,
**dadurch gekennzeichnet,**
**dass** das Distanzelement (12) oder zumindest ein solches Distanzelement (12) durch eine Prägung am jeweiligen Träger (2, 3) ausgebildet ist.

7. Positionssensor nach einem der Ansprüche 1 bis 6,
**dadurch gekennzeichnet,**
**dass** das Distanzelement (12) oder zumindest ein solches Distanzelement (12) aus einem elektrisch isolierenden Material besteht.

8. Positionssensor nach einem der Ansprüche 1 bis 7,
**dadurch gekennzeichnet,**
**dass** das Distanzelement (12) oder zumindest ein solches Distanzelement (12) aus einem elektrisch leitenden Material besteht und einen Bestandteil der Sensorschaltung (7), z.B. eine Leiterbahn (17) zur Kontaktierung einer der Elektroden (6, 8) oder einen Schutzwiderstand, bildet.

9. Positionssensor nach einem der Ansprüche 1 bis 8,
**dadurch gekennzeichnet,**
- **dass** ausschließlich am ersten Träger (2) wenigstens ein solches Distanzelement (12) ausgebildet ist, oder
- **dass** ausschließlich am zweiten Träger (3) wenigstens ein solches Distanzelement (12) ausgebildet ist,
- **dass** sowohl am ersten Träger (2) als auch am zweiten Träger (3) mindestens ein solches Distanzelement (12) ausgebildet ist.

10. Positionssensor nach einem der Ansprüche 1 bis 9,
**dadurch gekennzeichnet,**
**dass** mehrere Distanzelemente (12) vorgesehen sind, von denen zumindest zwei in der Betätigungsrichtung (9) unterschiedliche Dicken (13) aufweisen.

11. Positionssensor nach einem der Ansprüche 1 bis 10,
**dadurch gekennzeichnet,**
**dass** zumindest zwei Distanzelemente (12) im Schaltungsbereich (5) zwischen der Sensorschaltung (7) und dem Abstandshalterrahmen (4) seitlich nebeneinander angeordnet sind.

12. Positionssensor nach einem der Ansprüche 1 bis 11,
**dadurch gekennzeichnet,**
- **dass** der erste Träger (2) als elastisch biegeverformbare flexible Folie ausgestaltet ist, und/oder
- **dass** der Abstandshalterrahmen (4) als elastisch biegeverformbar flexible Folie ausgestaltet ist.

13. Positionssensor nach einem der Ansprüche 1 bis 12,
**dadurch gekennzeichnet,**
**dass** der Positionssensor (1) als Foliensensor ausgestaltet ist.

14. Positionssensor nach einem der Ansprüche 1 bis 13,
**dadurch gekennzeichnet,**
**dass** der Positionssensor (1) als Potentiometer ausgestaltet ist.

15. Positionssensor nach einem der Ansprüche 1 bis 14,
**dadurch gekennzeichnet,**
**dass** der Positionssensor (1) als linearer Weggeber oder als Drehwinkelgeber ausgestaltet ist.

## Claims

1. A position sensor, in particular potentiometer,
- with a first carrier (2) which, in a circuit region (5), has at least one electrode (6) of an electric and/or electronic sensor circuit (7),
- with a second carrier (3) that is configured as an elastically bendable and deformable flexible film that is arranged opposite the first carrier (2) and has at least one other electrode (8) of the sensor circuit (7),
- with a spacer frame (4) via which the two carriers (2, 3) are fastened to one another, which laterally encloses the circuit region (5), and which keeps the carriers (2, 3) spaced apart from one another with regard to an actuation direction (9) in such a manner that the electrodes (6, 8) of the sensor circuit (7) can be brought in contact with one another by pressing and bending the second carrier (3) against the first carrier (1),
**characterized in**
**that** at least on one carrier (2, 3) in the circuit region (5) enclosed by the spacer frame (4) at least one spacer element (12) is arranged laterally next to the at least one electrode (6, 8), on which spacer element the carriers (2, 3) support one another at least during the bending of the second carrier (3), which bending serves for actuating the position sensor (1).

2. The position sensor according to claim 1,
**characterized in**
**that** the at least one spacer element (12) has a thickness in the actuating direction(9), which thickness is greater than the thickness (13) of the electrodes (6, 8) that contact one another when actuating the position sensor (1), wherein in particular the thickness (13) of the respective spacer element (12) can be equal to the thickness (14) of the spacer frame (4) or greater than the thickness (14) of the spacer frame (4).

3. The position sensor according to claim 1 or claim 2,
**characterized in**
**that** always or at least during the actuation of the position sensor (1) via the at least one spacer element (12), the two carriers (2, 3) rest loosely against one another.

4. The position sensor according to any one of the claims 1 to 3,
**characterized in**
**that** the spacer element (12) or at least such a spacer element (12) is formed by a polymer paste that is printed onto the respective carrier (2, 3) using a printing method, in particular screen printing, and is cured thereon.

5. The position sensor according to any one of the claims 1 to 4,
**characterized in**
**that** the spacer element (12) or at least such a spacer element (12) is formed by a film material that is glued onto the respective carrier (2, 3).

6. The position sensor according to any one of the claims 1 to 5,
**characterized in**
**that** the spacer element (12) or at least such a spacer element (12) is formed by an embossment on the respective carrier (2, 3).

7. The position sensor according to any one of the claims 1 to 6,
**characterized in**
**that** the spacer element (12) or at least such a spacer element (12) consists of an electrically insulating material.

8. The position sensor according to any one of the claims 1 to 7,
**characterized in**
**that** the spacer element (12) or at least such a spacer element (12) consists of an electrically conductive material and forms an integral part of the sensor circuit (7), e.g., a conductor path (17) for contacting one of the electrodes (6, 8) or a protective resistor.

9. The position sensor according to any one of the claims 1 to 8,
**characterized in**
- **that** exclusively on the first carrier (2), at least one such spacer element (12) is formed, or
- **that** exclusively on the second carrier (3) at least one such spacer element (12) is formed,
- **that** on both the first carrier (2) and the second carrier (3) at least one such spacer element (12) is formed.

10. The position sensor according to any one of the claims 1 to 9,
**characterized in**
**that** a plurality of spacer elements (12) are provided, of which at least two have different thicknesses (13) in the actuation direction (9).

11. The position sensor according to any one of the claims 1 to 10,
**characterized in**
**that** at least two spacer elements (12) are arranged in the circuit region (5) laterally next to one another between the sensor circuit (7) and the spacer frame (4).

12. The position sensor according to any one of the claims 1 to 11,
**characterized in**
- **that** the first carrier (2) is configured as an elastically bendable and deformable flexible film, and/or
- **that** the spacer frame (4) is configured as elastically bendable and deformable flexible film.

13. The position sensor according to any one of the claims 1 to 12,
**characterized in**
**that** the position sensor (1) is configured as a film sensor.

14. The position sensor according to any one of the claims 1 to 13,
**characterized in**
**that** the position sensor (1) is configured as a potentiometer.

15. The position sensor according to any one of the claims 1 to 14,
**characterized in**
**that** the position sensor (1) is configured as a linear position sensor or as a rotary sensor.

## Revendications

1. Capteur de position, notamment potentiomètre,
- comportant un premier support (2), qui présente dans une région de circuit (5) au moins une électrode (6) d'un circuit de détection (7) électrique et/ou électronique,
- comportant un deuxième support (3), qui est conçu de manière déformable élastiquement comme un film flexible, qui est disposé en vis-à-vis du premier support (2) et qui présente au moins une autre électrode (8) du circuit de détection (7),
- comportant un cadre d'entretoisement (4), par l'intermédiaire duquel les deux supports (2,3) sont fixés l'un à l'autre, qui enchâsse latéralement la région de circuit (5) et qui espace les supports (2,3) l'un de l'autre par rapport à un dispositif d'actionnement (9), de telle sorte que les électrodes (6,8) du circuit de détection (7) puissent être contactées l'une avec l'autre par pression et flexion du deuxième support (3) contre le premier support (1),
**caractérisé en ce que**
au moins sur un des supports (2,3) dans la région de circuit (5) enchâssée par le cadre d'entretoisement (4) au moins un élément d'écartement (12) est disposé latéralement à côté d'au moins une électrode (6,8), sur laquelle les supports (2,3) s'appuient au moins lors de la flexion du deuxième support (3) servant à actionner le capteur de position (1).

2. Capteur de position selon la revendication 1,
**caractérisé en ce que**
au moins un élément d'écartement (12) présente dans la direction d'actionnement (9) une épaisseur (13), qui est plus grande que l'épaisseur des électrodes (6,8) contactées lors de l'actionnement du capteur de position (1), dans lequel notamment l'épaisseur (13) de l'élément d'écartement respectif (12) est identique à l'épaisseur (14) du cadre d'entretoisement (4) ou peut être plus grande que l'épaisseur (14) du cadre d'entretoisement (4).

3. Capteur de position selon les revendications 1 ou 2,
**caractérisé en ce que**
les deux supports (2,3) viennent reposer l'un sur l'autre de manière relâchée toujours ou au moins lors de l'actionnement du capteur de position (1) par l'intermédiaire d'au moins un élément d'écartement (12).

4. Capteur de position selon une des revendications 1 à 3,
**caractérisé en ce que**
l'élément d'écartement (12) ou au moins un tel élément d'écartement (12) est formé par une pâte polymère, qui est imprimée avec un procédé d'impression, notamment la sérigraphie, sur le support respectif (2,3) et durcie.

5. Capteur de position selon une des revendications 1 à 4,
**caractérisé en ce que**
l'élément d'écartement (12) ou au moins un tel élément d'écartement (12) est formé par un matériau de film, qui est collé sur le support respectif (2,3).

6. Capteur de position selon une des revendications 1 à 5,
**caractérisé en ce que**
l'élément d'écartement (12) ou au moins un tel élément d'écartement (12) est réalisé par un empreinte sur le support respectif (2,3).

7. Capteur de position selon une des revendications 1 à 6,
**caractérisé en ce que**
l'élément d'écartement (12) ou au moins un tel élément d'écartement (12) est constitué d'un matériau électriquement isolant.

8. Capteur de position selon une des revendications 1 à 7,
**caractérisé en ce que**
l'élément d'écartement (12) ou au moins un tel élément d'écartement (12) est constitué d'un matériau électriquement conducteur et fait partie intégrante du circuit de détection (7), par ex. une piste conductrice (17) pour contacter une des électrodes (6,8) ou une résistance de protection.

9. Capteur de position selon une des revendications 1 à 8,
**caractérisé en ce que**
- exclusivement sur le premier support (2) au moins un tel élément d'écartement (12) est réalisé, ou
- exclusivement sur le deuxième support (3) au moins un tel élément d'écartement (12) est réalisé,
- tant sur le premier support (2) que sur le deuxième support (3) au moins un tel élément d'écartement (12) est réalisé.

10. Capteur de position selon une des revendications 1 à 9,
**caractérisé en ce que**
plusieurs éléments d'écartement (12) sont prévus, desquels au moins deux présentent des épaisseurs (13) différentes dans la direction d'actionnement (9).

11. Capteur de position selon une des revendications 1 à 10,
**caractérisé en ce que**
au moins deux éléments d'écartement (12) sont disposés latéralement côte à côte dans la région de circuit (5) entre le circuit de détection (7) et le cadre d'entretoisement (4).

12. Capteur de position selon une des revendications 1 à 11,
**caractérisé en ce que**
- le premier support (2) est conçu comme un film flexible déformable élastiquement par flexion, et/ou
- le cadre d'entretoisement (4) est conçu comme un film flexible déformable élastiquement par flexion.

13. Capteur de position selon une des revendications 1 à 12,
**caractérisé en ce que**
le capteur de position (1) est conçu comme un capteur de film.

14. Capteur de position selon une des revendications 1 à 13,
**caractérisé en ce que**
le capteur de position (1) est conçu comme un potentiomètre.

15. Capteur de position selon une des revendications 1 à 14,
**caractérisé en ce que**
le capteur de position (1) est conçu comme un capteur de déplacement linéaire ou comme un capteur d'angle de rotation.
